# FASCICULE DE BREVET EUROPEEN

(11) **EP 3 344 547 B1**
(45) Date de publication et mention de la délivrance du brevet: **14.10.2020**
(21) Numéro de dépôt: 16760076.6
(22) Date de dépôt: 02.09.2016
(51) Int. Cl.: B64G 1/64, F42B 15/38, F42B 1/032

(54) **PROCEDE DE LIAISON ET DE SEPARATION LINEAIRE DE DEUX ELEMENTS**
VERFAHREN ZUR LINEAREN TRENNUNG UND VERBINDUNG VON ZWEI ELEMENTEN
METHOD FOR THE LINEAR SEPARATION AND CONNECTION OF TWO ELEMENTS

(30) Priorité: 03.09.2015 FR 1558166
(43) Date de publication de la demande: 11.07.2018
(73) Titulaire: ArianeGroup SAS, 75015 Paris (FR)
(72) Inventeur: MEDINA, Felipe, 78500 SARTROUVILLE (FR)
(74) Mandataire: Brevalex
(86) Numéro de dépôt international: PCT/EP2016/070743
(87) Numéro de publication internationale: WO 2017/037246

(56) Documents cités:
- FR-A1- 3 017 205
- US-A- 3 108 540
- US-A- 3 244 104
- US-A- 5 969 287
- US-B1- 7 278 354

## Description

### Domaine de l'invention

L'invention concerne une séparation linéaire, la plus douce possible, d'un premier élément par rapport à un second élément, qui sont au préalablement liés de façon rigide. L'invention s'applique, de préférence, aux lanceurs spatiaux, pour la séparation des étages entre eux ou d'un étage et de la charge utile, de missiles, de sondes spatiales, voire d'avions, dans le cas d'un largage de charge utile. Cette séparation a pour but de réduire la masse de l'ensemble embarqué, ou de larguer une charge utile. Ces applications se caractérisent par le fait qu'on a besoin de séparer des objets qui peuvent être fragiles, par exemple un satellite, et dont la liaison a eu à subir des charges mécaniques élevées, comme celles subies lors de la propulsion par un lanceur.

### Art antérieur et problème posé

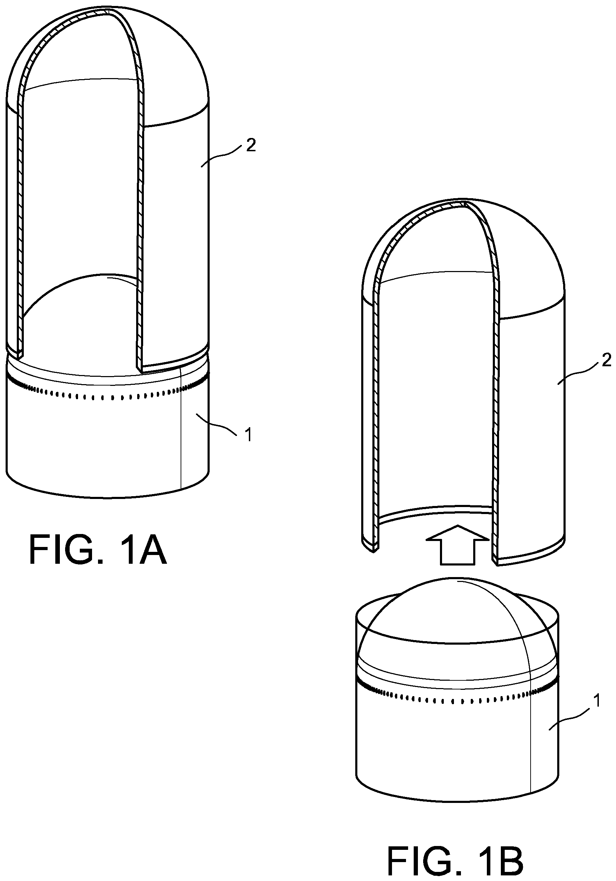

Les Figures 1A et 1B illustrent ce principe de séparation entre deux éléments 1 et 2 d'un lanceur. Le premier élément 1 est, de préférence, un élément de rang n, de préférence, un premier étage moteur. Le deuxième élément est un élément de rang n + 1, soit un deuxième élément moteur, soit une charge utile, par exemple un satellite. La séparation linéaire, dans l'axe du lanceur, doit donc être effectuée sans détérioration de la base du deuxième élément et, dans le cas où on désire récupérer le premier élément 1, sans détérioration de la surface de celui-ci, où se trouvait la liaison entre ces deux éléments 1 et 2.

Dans l'état actuel de la technique, le système de liaison-séparation est principalement de quatre types, qui sont les suivants :
1°) les liaisons par boulonnerie, rivetage et découpe pyrotechnique par fusion locale de la structure. Ces systèmes, de par leur fonctionnement, engendrent des débris de matière éjectés. De plus, la découpe provoque un choc important dans la structure, ce qui peut être dommageable pour les charges utiles du lanceur ;
   Le document de brevet FR 2 947 808 montre un exemple de mise en œuvre d'une telle solution.
2°) les liaisons par rivetage et découpe pyrotechnique par rupture de la structure, par l'intermédiaire de la déformation d'un élément pyrotechnique. Cette solution est la plus employée et n'engendre pas de débris, mais provoque un choc très important ;
3°) les liaisons par boulonnerie pyrotechnique et rupture ou séparation de l'écrou. Ce type de solution engendre beaucoup moins de chocs que les deux précédentes, mais nécessite plusieurs boulons pour passer les efforts d'un élément à l'autre, engendrant donc des risques plus importants de défaillances du fait du nombre de dispositifs impliqués ;
4°) les liaisons par sangle et ruptures de celle-ci par boulons pyrotechniques. Ce type de solution ne permet pas de passer de gros efforts entre les deux éléments et n'autorise pas de diamètres trop importants pour les lanceurs. Dans ce cas également, le relâchement des contraintes provoque un choc important dans les structures.

De manière générale, dans l'état actuel de ces techniques, les systèmes dérivant de ces solutions de liaison-séparation ont la particularité de laisser, la plupart du temps, des aspérités sur la forme extérieure du lanceur, après la séparation.

Le but de l'invention est de remédier aux inconvénients susmentionnés.

D'autre part, par le document de brevet US 5 402 728, on connaît un dispositif de boulonnage auto destructeur mettant en œuvre de la thermite. Par le document de brevet FR 3 017 205 on connaît une charge creuse comprenant un matériau pyrogène, de préférence de la thermite, pour la séparation de deux étages d'un engin aéronautique.

### Objets de l'invention

A cet effet, un premier objet principal de l'invention est un procédé de liaison et de séparation linéaire de deux éléments devant être séparés de façon certaine, ces deux éléments étant liés linéairement l'un à l'autre, par une liaison locale définie, la séparation devant ayant lieu par échauffement rapide et partiel de l'ensemble, au niveau ou aux alentours de la liaison, cet échauffement étant déclenché à distance.

Selon l'invention, le procédé est défini dans la revendication 1.

Le deuxième objet principal est un dispositif de liaison et de séparation linéaire de deux éléments, un premier élément et un deuxième élément, liés linéairement l'un à l'autre par une liaison locale définie et devant être séparés de façon certaine, la séparation ayant lieu par échauffement rapide et partielle d'une partie déterminée de la liaison locale de la liaison, cet échauffement étant déclenché à distance.

Selon l'invention, le dispositif est défini dans la revendication

Dans une première réalisation de ce dispositif, l'élément de liaison est constituée d'une pièce à part entière, ne faisant partie d'aucuns des deux premier et deuxième éléments.

Dans une deuxième réalisation de ce dispositif, l'élément de liaison constitue le prolongement d'une paroi externe d'un de ces deux éléments, que sont le premier élément et le deuxième élément.

De préférence, le mélange utilisé est placé dans une couronne de découpe, placée elle-même contre la paroi intérieure de l'élément de liaison.

Cette couronne de découpe est constituée, de préférence, d'un corps fermé et contenant le mélange et constituant une couronne torique.

Dans une première réalisation de l'invention, la couronne de découpe fermée est fixée à la structure intermédiaire par des moyens de fixation qui sont placés entre l'endroit où doit avoir la coupure de l'élément de liaison et le première étage, porteur pour rester solidaire de ce premier étage porteur.

Dans une deuxième réalisation de l'invention, la couronne torique fermée est constituée par deux parois concentriques des moyens de liaison solidaires du deuxième étage porteur, de deux couches annulaires d'isolant placé dans deux plans parallèles entre les deux parois et perpendiculaire à elles, le moyen de liaison se complète d'une partie solidaire du premier étage et fixé aux deux parois par une liaison mécanique, la coupure de l'élément de liaison se faisant au niveau des deux parois concentriques.

Un troisième objet principal de l'invention est un lanceur aéronautique comprenant au moins un propulseur central, porteur, constituant le premier élément, et au moins un étage, porté, fixé sur le propulseur central et constitué par le deuxième élément.

Selon l'invention, ce lanceur comprend un dispositif, tel que précédemment décrit.

La couronne de découpe fermée peut être fixée à l'élément de liaison par des moyens de fixation placés entre l'endroit où doit se produire la coupure de l'élément de liaison et le premier étage porteur du lanceur, afin de rester solidaire de ce premier étage porteur.

Dans une autre réalisation, la couronne de découpe fermée peut être constituée par deux parois concentriques des moyens de liaison solidaires du deuxième étage et de deux couches annulaires d'isolant placées entre les deux parois concentriques, le moyen de liaison se complétant d'une partie solidaire du premier étage et fixé aux deux parois concentriques par un moyen mécanique de liaison, la coupure de l'élément de liaison se faisant au niveau des deux parois concentriques.

### Liste des figures

L'invention et ses différentes caractéristiques et réalisations seront mieux comprises à la lecture de la description suivante, accompagnée de plusieurs figures décrivant, respectivement :
- figures 1A et 1B, un schéma représentant la séparation de deux éléments d'un lanceur aéronautique ;
- figures 2A, 2B, 2C, trois schémas représentant l'application de l'invention sur un lanceur aéronautique ;
- figures 3A, 3B et 3C, des schémas relatifs au fonctionnement du dispositif selon l'invention ; et
- figure 4, en coupe, une réalisation particulière de l'invention.

### Description détaillée de l'invention

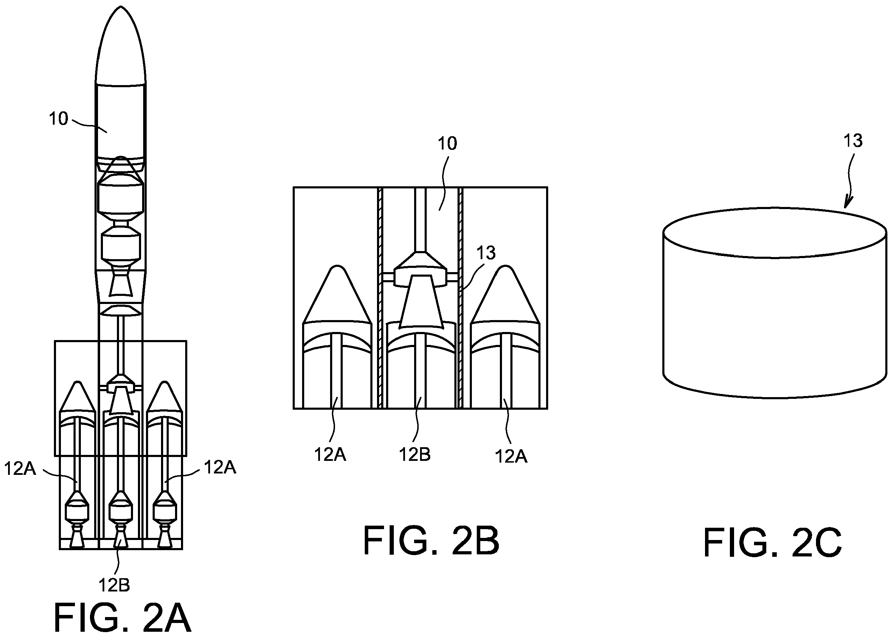

La figure 2A représente les étages 10 d'un lanceur aéronautique, équipé de plusieurs propulseurs 12A et 12B, placés à la base des étages 10 du lanceur aéronautique.

La figure 2B montre un détail de cet ensemble, notamment au niveau de la partie supérieure des propulseurs 12A et 12B. En effet, on voit que le propulseur central 12B est surmonté des étages 10. La liaison s'effectue par un élément de liaison 13, qui est représenté à part de la figure 2C.

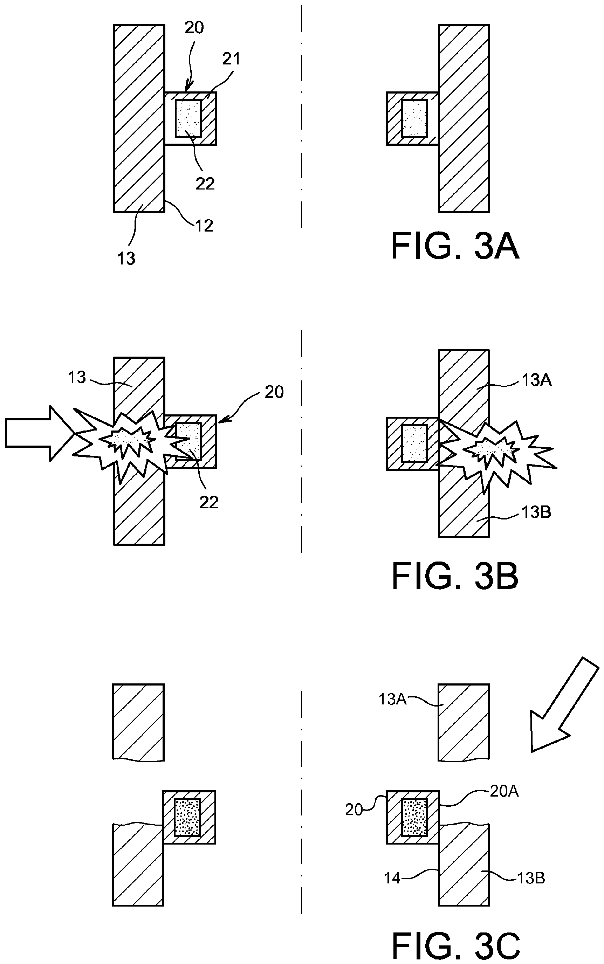

Le dispositif selon l'invention, ainsi que le procédé de mise en œuvre, sont illustrés à la figure 3A, en coupe détaillée, au niveau de l'élément de liaison 13. Celui-ci comporte, sur sa paroi interne 14, une couronne de découpe 20. Cette dernière est constituée principalement d'un corps 21, torique et ouvert du côté de son diamètre externe. Il est rempli d'un matériau 22 pyrogène, énergétique ou de la thermite. On précise que sous le terme thermite, on comprend également les nanothermites.

En référence à la figure 3B, la mise à feu du matériau 22, constituant une substance pyrotechnique, provoque un échauffement brutal, jusqu'à la fusion des parties de l'élément de liaison 13, se trouvant en regard de ce matériau 22. L'échauffement de cette partie de l'élément de liaison 13, jusqu'à son point de fusion, provoque la séparation de cet élément de liaison 13, en deux parties. Ces deux parties sont représentées à la figure 3C, une partie supérieure 13A et une partie inférieure 13B. On comprend, sur cette figure 3C, que la couronne de découpe 20 a été préalablement fixée par un de ces bords 20A sur la paroi 14 de l'élément de liaison 13. De ce fait, après la séparation des deux parties inférieure 13B et supérieure 13A de l'élément de liaison 13, la couronne de découpe 20 reste solidaire d'une des deux parties, en l'occurrence la partie inférieure 13B de l'élément de liaison 13. En effet, dans l'application à un lanceur aéronautique, on choisit que la couronne de découpe 20 reste solidaire de l'étage inférieur, qui ne continu pas le vol de l'engin aéronautique et retombe sur terre. Cela permet d'éviter que la structure continuant le vol soit échauffée pendant une durée plus important que nécessaire.

Dans deux réalisations différentes du dispositif selon l'invention, l'élément de liaison 13 peut être une pièce à part entière, c'est-à-dire ne faisant pas partie ni d'un premier élément, ni d'un deuxième élément, qui doivent être séparés, à savoir les étages 10 et le propulseur central 12B. Cet élément de liaison 13 est alors soit soudée ou collée, vissée, boulonnée, par ces deux extrémités, à chacun de ces deux éléments.

Dans une deuxième réalisation, on prévoit que l'élément de liaison 13 fasse partie intégrante de la paroi d'un des deux éléments, de préférence l'élément inférieur, à savoir le propulseur central 12B. En d'autres termes, dans ce cas, l'élément de liaison 13 est le prolongement de la paroi externe de ce propulseur central 12B.

En outre, on peut également envisager que les deux parties 13A et 13B de l'élément de liaison soit deux pièces différentes solidarisées entre elles, par exemple par brasage, par collage ou autre.

Des moyens de déclenchement pyrotechnique à distance sont prévus pour initier la réaction du matériau 22.

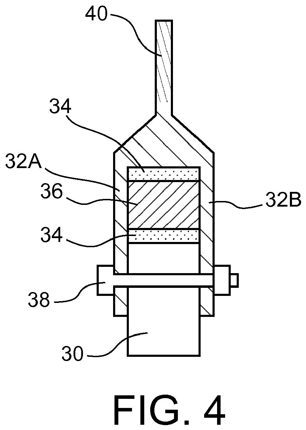

En référence à la figure 4, une réalisation particulière de l'invention prévoit la paroi du deuxième étage 40 se termine par deux parois concentriques 32A et 32B à l'intérieur desquelles se trouve le mélange de thermite et de composition intermétallique. Pour confiner ce mélange, on utilise deux couches d'isolants 34 placées au-dessus et en dessous du mélange.

La liaison avec le premier étage 30 se fait par des moyens mécaniques, par exemple des boulons 38 traversant les deux parois concentriques 32A et 32B et l'extrémité de la paroi externe du premier étage du lanceur. La rupture s'effectue donc sur les parois concentriques 32A et 32B, au niveau du mélange de solution thermite/compositions intermétallique.

## Revendications

1. Procédé de liaison et de séparation linéaire de deux éléments, un premier élément et un deuxième élément liés linéairement l'un à l'autre, au moyen d'une liaison locale définie et devant être séparée de façon certaine, la séparation ayant lieu par un échauffement rapide et partielle de la liaison, l'échauffement étant déclenché à distance,
**caractérisé en ce qu'**il comprend les étapes suivantes :
- lier le premier élément et le deuxième élément par un élément de liaison (13) prenant la forme d'une pièce additionnelle ou d'un prolongement d'une paroi de l'un des premier et deuxième éléments ;
- équiper cet élément de liaison (13) d'un mélange de thermite et d'une composition intermétallique, générateur de chaleur, amorçable par une liaison électrique de commande, et placé contre l'élément de liaison (13) ; et
- déclencher pyrotechniquement ledit mélange (22) pour provoquer l'échauffement rapide et le sectionnement en deux par fusion de l'élément de liaison (13).

2. Dispositif de liaison et de séparation linéaires de deux éléments, à savoir un premier élément et un deuxième élément, liés linéairement l'un à l'autre par une liaison locale définie et devant être séparés de façon certaine, la séparation ayant lieu par échauffement rapide et partiel d'une partie déterminée de l'élément de liaison, cet échauffement étant déclenché à distance,
**caractérisé en ce qu'**il comprend :
- un élément de liaison (13) pour relier le premier élément et le deuxième élément et prenant la forme d'une pièce additionnelle ou d'un prolongement d'une paroi de l'un des premier et deuxième éléments ;
- un mélange (22) de thermite et d'une composition intermétallique, générateur de chaleur, placé contre l'élément de liaison (13) ; et
- des moyens de déclenchement pyrotechnique à distance du mélange (22).

3. Dispositif selon la revendication 2, **caractérisé en ce que** l'élément de liaison (13) est une couronne de liaison des premier et deuxième éléments, c'est-à-dire est constituée d'une pièce à part entière ne faisant partie d'aucun des premier et deuxième éléments.

4. Dispositif selon la revendication 2, **caractérisé en ce que** l'élément de liaison (13) est constitué par le prolongement d'une paroi externe d'un des deux éléments que sont le premier élément et le deuxième élément.

5. Dispositif selon la revendication 2, **caractérisé en ce que** le mélange (22) est placé dans une couronne de découpe (20) fermée, placée contre une surface interne (14) de l'élément de liaison (13).

6. Dispositif selon la revendication 5, **caractérisé en ce que** la couronne de découpe (20) est constituée d'un corps (21) fermé contenant le mélange (22).

7. Lanceur aéronautique comprenant au moins un étage porté (10), et un étage porteur ou propulseur central (12B), sur lequel est fixé le au moins un étage porté (10), **caractérisé en ce qu'**il comprend un dispositif selon l'une des revendications 2 à 6, pour lequel le premier élément est l'étage porté (10), et le deuxième élément est l'étage porteur ou propulseur central (12B).

8. Lanceur selon la revendication 7, dans lequel le dispositif est conforme à la revendication 5 ou 6, et dans lequel la couronne de découpe (20) fermée est fixée à l'élément de liaison (13) par des moyens de fixation placés entre l'endroit où doit se produire la coupure de l'élément de liaison et l'étage porteur ou propulseur central (12B), afin de rester solidaire de l'étage porteur ou propulseur central (12B).

9. Lanceur selon la revendication 7, dans lequel l'élément de liaison (13) est défini par deux parois concentriques (32A, 32B) solidaires de l'étage porté (40), deux couches annulaires (34) d'isolant étant placées entre les deux parois concentriques (32A, 32B), respectivement au-dessus et au-dessous du mélange (36) de thermite et de composition intermétallique,une partie solidaire de l'étage porteur ou propulseur central (30) étant fixée aux deux parois concentriques (32A, 32B) par des moyens mécaniques de liaison.

## Patentansprüche

1. Verfahren zum linearen Verbinden und Trennen zweier Elemente, nämlich eines ersten Elements und eines zweiten Elements, die durch eine definierte bereichsweise Verbindung linear miteinander verbunden sind und sicher getrennt werden sollen, wobei die Trennung durch eine schnelle und partielle Erwärmung der Verbindung erfolgt, wobei die Erwärmung fernausgelöst wird, **dadurch gekennzeichnet, dass** es die folgenden Schritte umfasst:
- Verbinden des ersten Elements und des zweiten Elements durch ein Verbindungselement (13), das die Form eines Zusatzteils oder einer Verlängerung einer Wand eines aus erstem und zweitem Element annimmt;
- Beschicken dieses Verbindungselements (13) mit einem Gemisch aus Thermit und einer wärmeerzeugenden intermetallischen Zusammensetzung, das durch eine elektrische Steuerverbindung gezündet werden kann und am Verbindungselement (13) angeordnet ist; und
- pyrotechnisches Zünden des Gemisches (22), um eine schnelle Erwärmung und Halbierung des Verbindungselements (13) durch Schmelzen zu bewirken.

2. Vorrichtung zum linearen Verbinden und Trennen zweier Elemente, nämlich eines ersten Elements und eines zweiten Elements, die durch eine definierte bereichsweise Verbindung linear miteinander verbunden sind und sicher getrennt werden sollen, wobei die Trennung durch eine schnelle und partielle Erwärmung eines bestimmten Teils des Verbindungselements erfolgt, wobei diese Erwärmung fernausgelöst wird,
**dadurch gekennzeichnet, dass** sie enthält:
- ein Verbindungselement (13) zum Verbinden des ersten und des zweiten Elements, das die Form eines Zusatzteils oder einer Verlängerung einer Wand eines aus erstem und zweitem Element annimmt;
- ein Gemisch (22) aus Thermit und einer wärmeerzeugenden intermetallischen Zusammensetzung, das am Verbindungselement (13) angeordnet ist; und
- Mittel zur pyrotechnischen Fernzündung des Gemischs (22).

3. Vorrichtung nach Anspruch 2,
**dadurch gekennzeichnet, dass**
das Verbindungselement (13) ein Verbindungsring zum Verbinden des ersten und des zweiten Elements ist, d.h. aus einem einstückigen Teil besteht, das weder zum ersten noch zum zweiten Elemente gehört.

4. Vorrichtung nach Anspruch 2,
**dadurch gekennzeichnet, dass**
das Verbindungselement (13) aus der Verlängerung einer Außenwand eines der beiden Elemente, nämlich des ersten Elements und des zweiten Elements, gebildet ist.

5. Vorrichtung nach Anspruch 2,
**dadurch gekennzeichnet, dass**
das Gemisch (22) in einem geschlossenen Schneidring (20) angeordnet ist, der an einer Innenwand (14) des Verbindungselements (13) angeordnet ist.

6. Vorrichtung nach Anspruch 5,
**dadurch gekennzeichnet, dass**
der Schneidring (20) aus einem geschlossenen Körper (21) besteht, der das Gemisch (22) beinhaltet.

7. Luftfahrt-Trägerrakete mit mindestens einer getragenen Stufe (10) und einer zentralen Träger- bzw. Boosterstufe (12B), an der die mindestens eine getragene Stufe (10) befestigt ist,
**dadurch gekennzeichnet, dass**
sie eine Vorrichtung nach einem der Ansprüche 2 bis 6 aufweist, wobei das erste Element ist getragene Stufe (10) ist und das zweite Element die zentrale Träger- bzw. Boosterstufe (12B) ist.

8. Trägerrakete nach Anspruch 7,
wobei die Vorrichtung dem Anspruch 5 oder 6 entspricht und wobei der geschlossene Schneidring (20) am Verbindungselement (13) durch Befestigungsmittel befestigt ist, die zwischen der Stelle, an welcher das Abtrennen des Verbindungselements erfolgen soll, und der zentralen Träger- bzw. Boosterstufe (12B) angeordnet sind, um mit dieser zentralen Träger- bzw. Boosterstufe (12B) fest verbunden zu bleiben.

9. Trägerrakete nach Anspruch 7,
wobei das Verbindungselement (13) durch zwei konzentrische Wände (32A, 32B) definiert ist, die mit der getragenen Stufe (40) fest verbunden sind, wobei zwei ringförmige Isolierschichten (34) zwischen den beiden konzentrischen Wänden (32A, 32B) angeordnet sind, nämlich über bzw. unter dem Gemisch (36) aus Thermit und einer intermetallischen Zusammensetzung, wobei ein fest mit der zentralen Träger- bzw. Boosterstufe (30) verbundenes Teil über mechanische Verbindungsmittel an den beiden konzentrischen Wänden (32A 32B) befestigt ist.

## Claims

1. Method for the linear connection and separation of two elements, a first and a second element linearly connected to each other by means of a defined local connection and that have to be securely separated, the separation occurring by a quick and partial warming-up of the connection, the warming-up being triggered remotely,
**characterised in that** it comprises the following steps:
- connecting the first element and the second element by a connecting element (13) taking the shape of an additional piece or an extension of a wall which of one of the first and second elements;
- equipping this connecting element (13) with a mixture of thermite and an intermetallic composition, that can be started by a controlled electrical connection, placed against the connecting element (13); and
- pyrotechnically triggering said mixture (22) to cause the quick warming-up and the splitting into two parts of the connecting element (13).

2. Device for the linear connection and separation of two elements, namely a first element and a second element, linearly connected to each other by a defined local connection and that have to be securely separated, the separation occurring by a quick and partial warming-up of a determined part of the connecting element, this warming-up being triggered remotely,
**characterised in that** it comprises:
- a connecting element (13) for connecting the first element and the second element and taking the shape of an additional piece or an extension of a wall which of one of the first and second elements;
- a mixture (22) of thermite and an intermetallic composition that generates heat, placed against the connecting element (13); and
- means for remotely pyrotechnically triggering the mixture (22).

3. Device according to claim 2, **characterised in that** the connecting element (13) is a ring for connecting the first and second elements, in other words, constituted of a separate part not forming any part of the first and second elements.

4. Device according to claim 2, **characterised in that** the connecting element (13) is constituted by the extension of an outer wall of one of the two elements which are the first element and the second element.

5. Device according to claim 2, **characterised in that** the mixture (22) is placed in a closed cutting ring (20), placed against an inner surface (14) of the connecting element (13).

6. Device according to claim 5, **characterised in that** the cutting ring (20) is constituted of a closed body (21) containing the mixture (22).

7. Aeronautical launcher comprising at least one supported stage (10), and a supporting stage or central thruster (12B) whereon the at least one supported stage (10) is secured, **characterised in that** it comprises a device according to one of the claims 2 to 6, for which the first element is the supported stage (10), and the second element is the supporting stage or central thruster (12B).

8. Launcher according to claim 7, wherein the device is according to claim 5 or 6, and wherein the closed cutting ring (20) is secured to the connecting element (13) by securing means placed between the place where the connecting element is to be cut and the supporting stage or central thruster (12B), in order to remain connected to the supporting stage or central thruster (12B).

9. Launcher according to claim 7, wherein the connecting element (13) is defined by two concentric walls (32A, 32B) connected to the supported stage (40), two annular layers (34) of insulating material being placed between the two concentric walls (32A, 32B), respectively above and under the mixture (36) of thermite and intermetallic composition, a part connected to the supporting stage or central thruster (30) being secured to the two concentric walls (32A, 32B) by mechanical connecting means.
